# EUROPÄISCHE PATENTSCHRIFT

(11) **EP 1 761 709 B1**
(45) Veröffentlichungstag und Bekanntmachung des Hinweises auf die Patenterteilung: **23.09.2009**
(21) Anmeldenummer: 05716784.3
(22) Anmeldetag: 24.02.2005
(51) Int. Cl.: F15B 13/00

(54) **STEUERGERÄTEGEHÄUSE FÜR EINE ELEKTRONISCHE BREMSE**
CONTROL DEVICE HOUSING FOR AN ELECTRONIC BRAKE
BOITIER D'ELEMENTS DE COMMANDE POUR FREIN ELECTRONIQUE

(30) Priorität: 24.06.2004 DE 102004030644
(43) Veröffentlichungstag der Anmeldung: 14.03.2007
(73) Patentinhaber: Continental Teves AG & Co. oHG, 60488 Frankfurt am Main (DE)
(72) Erfinder: HEISE, Andreas, 64390 Erzhausen (DE); JÜRGENS, Michael, 61200 Wölfersheim (DE); GILB, Jürgen Peter, 61273 Wehrheim (DE)
(86) Internationale Anmeldenummer: PCT/EP2005/050784
(87) Internationale Veröffentlichungsnummer: WO 2006/000470

(56) Entgegenhaltungen:
- EP-B- 0 520 047
- WO-A-89/10286
- DE-A1- 10 011 807
- DE-A1- 19 518 522
- DE-A1- 19 743 842
- US-A- 5 138 523
- PATENT ABSTRACTS OF JAPAN Bd. 2003, Nr. 12, 5. Dezember 2003 (2003-12-05) -& JP 2003 224386 A (TOYOTA MOTOR CORP), 8. August 2003 (2003-08-08)

## Beschreibung

Die Erfindung betrifft ein elektronisches Steuergerätegehäuse für elektronische Bremssysteme, insbesondere in Kraftfahrzeugen, gemäß Oberbegriff von Anspruch 1.

Aus der EP 0 520 047 B1 ist ein ABS-Steuergerät bekannt, welches nach dem Prinzip eines sogenannten "magnetischen Steckers" mit beweglichen, elastisch gehaltenen Ventilspulen in einem Elektronikgehäuse aufgebaut ist. Die Elektronikeinheit (ECU) mit integrierter Leiterplatte und den Ventilspulen ist dabei steckbar mit einem Ventilblock (HCU) verbunden, welcher die Ventildome und weitere Hydraulikkomponenten des Bremsenaggregats umfasst. Die ECU umfasst weiterhin einen integrierten Stecker zum Anschluss eines Verbindungskabels (z.B. Radsensorkabel). Steuergeräte nach diesem Prinzip haben sich im Automobilbau durchgesetzt und werden daher weit verbreitetet für vielfältige Regelungsaufgaben (z.B. ABS, ESP etc.) in Kraftfahrzeugbremssystemen eingesetzt.

Wie aus der DE 197 43 842 A1 hervorgeht, ist es auch bereits bekannt, in ABS-Steuergeräten zur Kühlung der elektronischen Bauelemente Kühlplatten aus Aluminium einzusetzen, wobei diese in der Regel flächig mit den Trägerplatten, welche die elektronischen Bauelemente und die Leiterbahnen tragen, verbunden worden sind. Das Reglergehäuse, welches in vielen Fällen aus Kunststoff besteht dient sehr häufig als Halterahmen für die Ventilspulen und zur Aufnahme der elektronischen Bauteile einschließlich der Einheit aus Kühlplatte und Leiterplatte. In einigen Fällen sind auch die Deckel des Reglergehäuses aus einem Material mit hoher Wärmeleitfähigkeit hergestellt worden, wobei die Kühlplatten mit diesem auch bereits durch entsprechende Wärmeleitelemente in thermischen Kontakt gebracht worden sind.

Die gattungsbildende DE 100 11 807 A1 beschreibt ein Steuergerätegehäuse für eine elektrohydraulische Bremse, welches mit besonderen Kühlmaßnahmen versehen ist. Das beschriebene Steuergerätegehäuse umfasst dazu einen Aluminiumdeckel, einen Gehäuserahmen und eine darin befestigte Leiterplatte für elektronische Bauelemente. Die lediglich einseitig mit elektronischen Bauelementen bestückte Leiterplatte ist flächig ohne einen Zwischenraum mit einer Kühlplatte verbunden.

In der US 5,13 8,523 A sind elastische Pads zur beabstandeten thermischen Ankopplung eines Kühlelements an elektronische Bauelemente beschrieben.

Es besteht schon seit längerem die allgemeine Aufgabe, die in den beschriebenen Reglergehäusen enthaltenen elektronischen Bauelemente möglichst bauraumsparend anzuordnen, wobei für eine ausreichende Kühlung der Bauelemente gesorgt werden muss. Gleichzeitig müssen diese Gehäuse den Anforderungen einer modernen Massenfertigung genügen, das heißt, sie müssen kostengünstig herstellbar, jedoch auch robust und zuverlässig sein. Diese unterschiedlichen Anforderungen sind nicht immer gleichzeitig ohne weiteres zu erfüllen.

Der vorliegenden Erfindung liegt nun die spezielle zusätzliche Aufgabe zugrunde, ein universell einsetzbares Steuergerätegehäuse mit Bauelementträger und Kühlplatte zur Verfügung zu stellen, wobei das Gehäuse mittels eines vorhandenen automatischen Bestückungsprozesses auf möglichst einfache und kostengünstige Weise herstellbar sein sollte.

Diese Aufgabe wird erfindungsgemäß gelöst durch das Steuergerätegehäuse gemäß Anspruch 1.

Das erfindungsgemäße Steuergerätegehäuse dient primär zur Aufnahme von elektronischen Regelbaugruppen, die auf Bauelementträgern zusammengefasst sind. Das Steuergerätegehäuse kann über elektrische und hydraulische Schnittstellen mit einer Hydraulikeinheit auf an sich bekannte Weise zu einem elektrohydraulischen Steuergerät verbunden werden. Gemäß dem an sich bekannten Prinzip des magnetischen Steckers sind die Spulen für die Hydraulikventile im Steuergerätegehäuse angeordnet. Beim Zusammenfügen von Steuergerätegehäuse und Ventilblock werden die Spulen über die aus dem Block hervorragenden Dome der Hydraulikventile geschoben. Das beschriebene elektrohydraulische Steuergerät wird bevorzugt in elektronischen Kraftfahrzeugbremssystemen eingesetzt.

Bevorzugt ist das erfindungsgemäße Steuergerätegehäuse zur Verwendung als ABS- oder ESP-Steuergerät vorgesehen. Es besteht jedoch nach einer weiteren bevorzugten Verwendung auch die Möglichkeit, das erfindungsgemäße Gehäuse für elektrohydraulische Bremssysteme (EHB) einzusetzen. Im allgemeinen lässt sich feststellen, dass bei der Verwendung als Reglergehäuse für ein ABS-Bremssystem weniger Kühlmaßnahmen für die Elektronik getroffen werden müssen, als bei der Verwendung für ein ESP-Bremssystem. Das erfindungsgemäße Steuergerätegehäuse besitzt den Vorteil, dass das Gehäuse an einen jeweils abhängig von der Verwendung bestehenden Kühlbedarf auf besonders einfache Weise angepasst werden kann. Dies wird gemäß der Erfindung durch eine beabstandete Anordnung von Bauelementträger und Kühlelement bzw. Kühldeckel erreicht, wobei im Zwischenraum mehrere Kühlelemente angeordnet sind.

Das Steuergerätegehäuse, welches insbesondere für ein elektronisches Bremssystem vorgesehen ist, weist zur Kühlung der elektronischen Bauelemente zumindest ein Kühlelement auf, wobei als Kühlelement entweder eine flächige zusätzliche Kühlplatte oder ein zumindest teilweise aus Metall ausgebildeter Deckel geeignet ist. Die Unterseite des flächigen Kühlelements steht in Kontakt mit einem einen Toleranzausgleich herstellenden flexiblen Wärmeleitelement bzw. mehreren dieser Wärmeleitelemente. Die Unterseite dieses bzw.: dieser Wärmeleitelemente ist dann unmittelbar oder mittelbar, z.B. über ein Wärmeleitblech, mit dem zu kühlenden elektronischen Bauelement verbunden.

Das toleranzausgeichende, insbesondere formstabile, flexible bzw. elastische Wärmeleitelement kann z.B. aus einem kompressiblen Silikonmaterial bestehen oder es handelt sich um ein Wärmeleitkissen, eine Wärmeleitfolie, einen Wärmeleitkleber, eine Wärmeleitpaste, ein Wärmeleitgel oder ein metallisches, etwas komprimierbares Federelement. Dieses Wärmeleitelement, welches insbesondere flächig ausgebildet ist, besitzt eine hohe Wärmeleitung, das heißt, es besteht überwiegend aus einem metallischen Material, wie z.B. Cu oder Al, oder es ist aus einem Kunststoff mit hoher Wärmeleitung, wie z.B. ein Metallpulver enthaltendes Elastomer, hergestellt. Im Prinzip kann das Wärmeleitelement aber auch so dick sein, dass es den gesamten Zwischenraum zwischen Kühlelement bzw. Deckel und Leiterplatte bzw. elektronischem Bauelement ausfüllt.

Das flexible Wärmeleitelement wird bevorzugt in großen Stückzahlen über Flachmaterial, z.B. von einer gewickelten Rolle, bereitgestellt und ist daher entsprechend konfektioniert. Es kann dabei zweckmäßig sein, bestimmte vorgegebene Dicken bereitzustellen, damit diese an unterschiedliche Bauhöhen oder spezifische thermische Eigenschaften der elektronischen Bauelemente angepasst werden können.

Ein wichtiger Vorteil der erfindungsgemäße Lösung besteht darin, dass durch die beabstandete Anordnung von Leitplatte und Kühleelement bzw. Deckel eine beidseitige Bestückung der Bauelementträger vorgenommen werden kann. Dabei kann es vorteilhaft sein, wenn die thermisch besonders belasteten Bauelemente im wesentlichen auf der dem Kühlelement zugewandten Seite angeordnet werden.

Die Abstandselemente sind zum Beispiel quaderförmige Körper definierter Höhe h aus einem wärmeleitenden Kunststoff oder aus Cu und werden bevorzugt zusammen mit dem Prozess der Bauelement-Bestückung auf den Bauelementträger aufgebracht. Sie sind daher zweckmäßigerweise werkzeugfallend ausgebildet. Im Falle von Kupferkörpern können diese zweckmäßigerweise schon verzinnt sein.

Das Kühlelement ist bevorzugt aus Anoxal oder Eloxal-Blech gefertigt. Dieses Material besitzt eine isolierende Oberfläche, so dass vorteilhafterweise die dünnen, kompressiblen toleranzausgleichenden Wärmeleitelemente sehr dünn oder elektrisch leitfähig ausgeführt sein können. Hierdurch wird ein besonders guter thermischer Kontakt erreicht. Ein weiterer Vorteil des flächigen Kühlelements besteht darin, dass eine gewisse Abschirmung gegen EMV-Strahlung erreicht wird.

Vorzugsweise wird ein Wärmetransfer zwischen den beiden Bestückungsseiten der Bauelementträger über umgeformte und eingenietete Kühlhütchen oder Kühlniete herbeigeführt. Weiterhin ist es zweckmäßig, die elektrische Kontaktierung der zwei Bestückflächen mittels einer Durchkontaktierungen vorzunehmen. Es entfällt dann der aufwendige Prozess, die Bauelementträger und das Kühlelement mit einem Prepreg-Material zu verbinden. Zumal die Wärmeleitfähigkeit des Prepreg-Materials schlechter ist, als die einer durchschnittlichen Wärmeleitpaste.

Weitere bevorzugte Aüsführungsformen ergeben sich aus den Unteransprüchen und der nachfolgenden Beschreibung der Figuren.

Nachfolgend wird die Erfindung an Hand von Beispielen näher erläutert.

Es zeigen
- Fig. 1a): ein erstes Ausführungsbeispiel eines Steuergerätegehäuses in Explosionszeichnung,
- Fig. 1b): das Steuergerätegehäuse gemäß Fig. 1a) in montierter Form,
- Fig. 2a): eine Ausschnittsvergrößerung des Bereichs zwischen Bauelementträger und Kühlelement bzw. Deckel,
- Fig. 2b): eine Ausschnittsvergrößerung entsprechend Fig. 2a) mit Kühlniet,
- Fig. 2c): eine Ausschnittsvergrößerung entsprechend Fig. 2a), bei der der Kühlniet mit dem wärmeleitenden Distanzelement verbunden ist und
- Fig. 2d): eine Ausschnittsvergrößerung entsprechend Fig. 2a) mit einem abgewinkelten Blechstreifen.

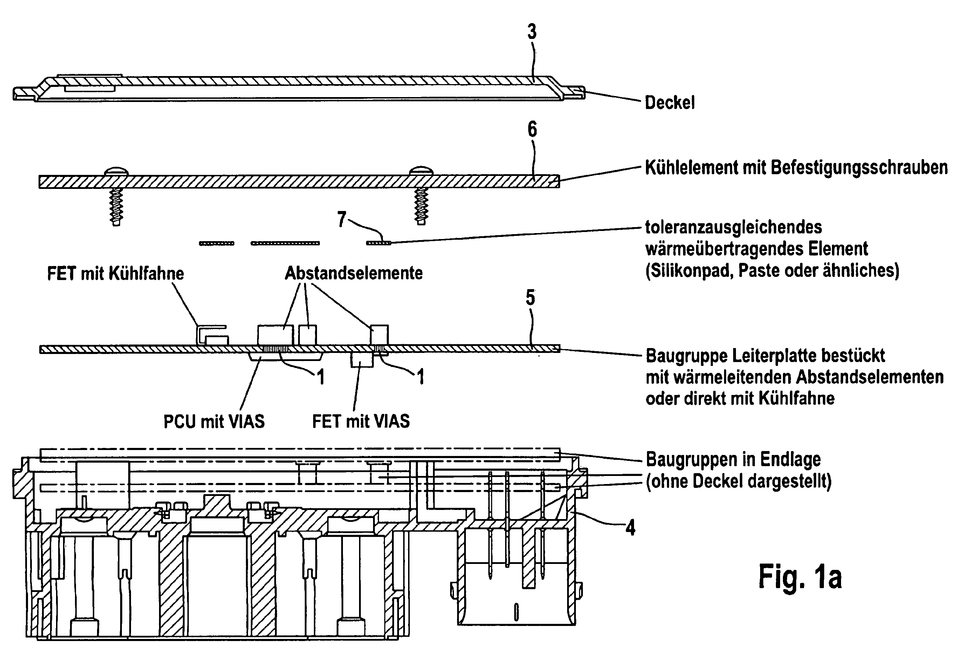

In Fig. 1a bilden Kunststoffgehäuseteil 4 und Metall- oder Kunststoffdeckel 3 das elektronische Steuergerätegehäuse 15. Die Befestigung des Deckels 3 erfolgt durch ein an sich bekanntes Reibschweißverfahren, wodurch sich eine wasserdichte, stoffschlüssige Verbindung des Deckels mit der Wandung von Gehäuseteil 4 ergibt. Alternativ kann es im Falle eines Deckels aus Metall sinnvoll sein, Deckel 3 auf herkömmliche Weise mit Gehäuseteil 4 zu verkleben. Innerhalb des Gehäuses sitzt Bauelementträger 5, welcher die elektronischen Bauelemente 12 trägt, auf einer geeigneten Auflage von Gehäuseteil 4 auf. Bauelementträger 5 ist über Einpresskontakte 16 fixiert. Oberhalb, etwas beabstandet zum Bauelementräger, sitzt Kühlplatte 6, welche mittels geeigneter Befestigungselemente, wie Schrauben 11, Nieten, oder durch Verstemmen an Gehäuserahmen 4 befestigt ist. Im Zwischenraum zwischen Bauelementträger 5 und Kühlplatte 6 ergeben sich durch die elektronischen Bauelemente unterschiedlich große Zwischenräume, welche mittels gut wärmeleitenden Kühlelementen 8 aufgefüllt werden. Kühlelemente 8 werden zweckmäßigerweise auf Bauelementträger 5 geklebt oder Bauelementträger 5 wird gemeinsam mit SMD-Bauteilen bestückt und anschließend gelötet. Denkbar ist auch eine Bestückung der thermisch kritischen Bauelemente 12 mit einem Kühlelement 8 auf der Deckel 3 zugewandten Bauelementträgerseite. Möglich ist auch eine thermische Kontaktierung einer abgewinkelten Kühlfahne 10 oder einem federnden Element (nicht dargestellt), welches mit dem zu kühlenden Bauelement 12 in Kontakt steht. Durch eine sinnvolle Anordnung der Kühlelemente 8 kann die für die Wärmeleitung nutzbare Fläche an die individuellen Anforderungen auf einfache Weise angepasst werden.

Noch bestehende geringfügige Toleranzen hinsichtlich der Bauhöhe h werden über dünne, toleranzausgleichende, also kompressibel-elastische Silikonplättchen 7 realisiert. Als Silikonmaterial wird eine an sich bekannte Zusammensetzung angewendet, welche durch einen Metallpulveranteil eine besonders hohe Wärmeleitfähigkeit aufweist.

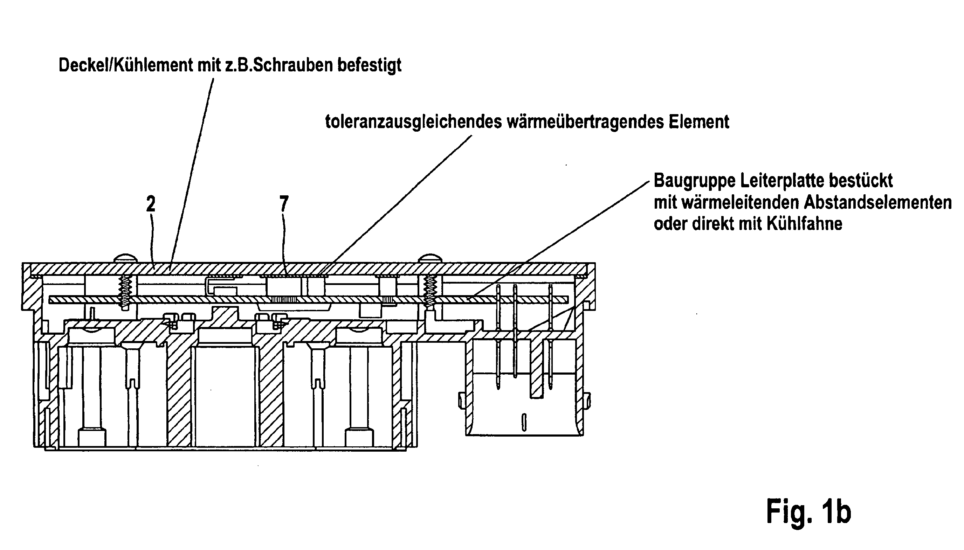

Ausgehend von Fig. 1a) zeigt Fig. 1b) ein zusammengefügtes Steuergerätegehäuse 15 mit dem Unterschied, dass Deckel 2, welcher aus Aluminium oder Stahl besteht, die Funktionen des Kühlens und Verschließens des Gehäuseteils 4 in sich vereint. Eine gewisse Vereinfachung besteht darin, dass durch die hier dargestellte Befestigung des Deckels das Reibschweißen wie in der Variante in Teilbild a) entfallen kann. Der Deckel kann neben der dargestellten Plattenform auch als Tiefziehteil ausgebildet sein. Auch eine Herstellung des Deckels durch Druckguß ist denkbar. Bevorzugt ist Bauelementträger 5 auf der dem Ventilblock 14 zugewandten Seite mit nicht dargestellten elektromagnetischen Spulen für die im Ventilblock angeordneten Hydraulikventile bestückt. Es ist im vorliegenden Fall von Vorteil, dass der Bauelementträger nicht, wie im Stand der Technik üblich, direkt mit einer Wärmeleitplatte verbunden ist, so dass sich auf dem Bauelementträger eine größere Bestückfläche im Bereich der Spulenkontaktierung wegen des Wegfalls von relativ großflächigen Befestigungsbereichen ergibt.

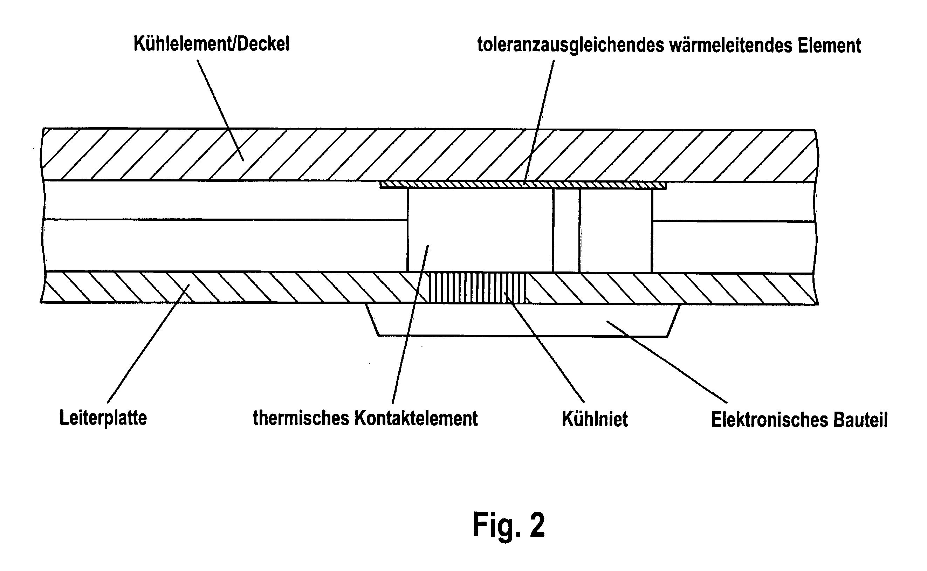

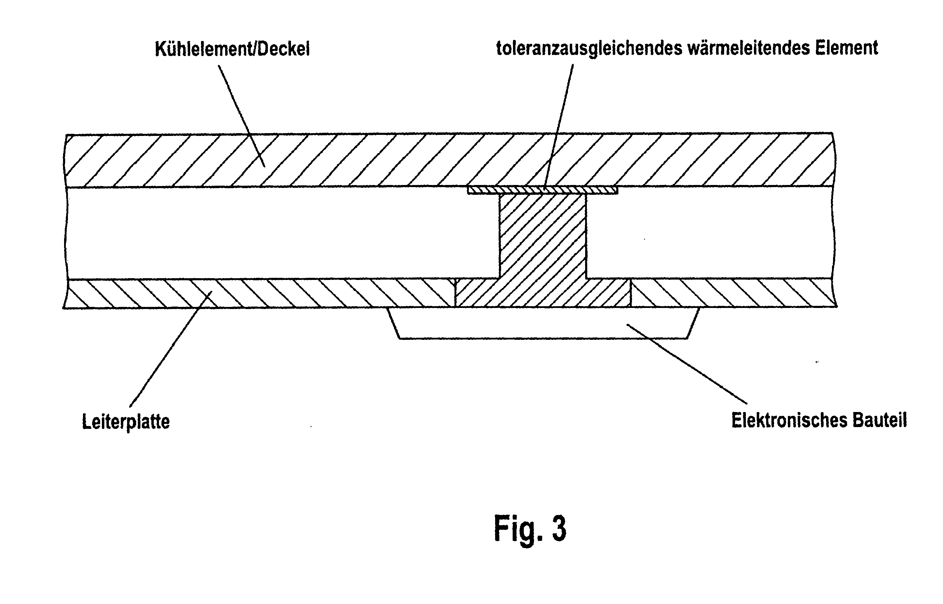

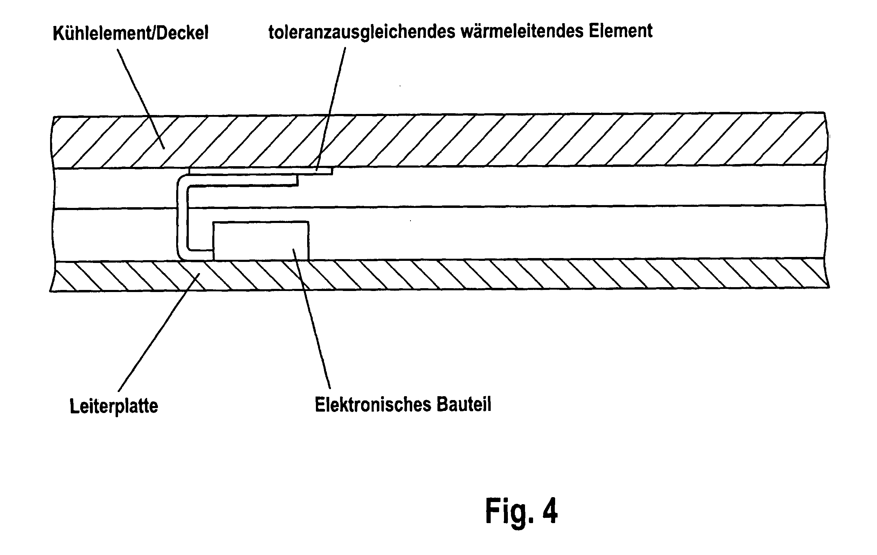

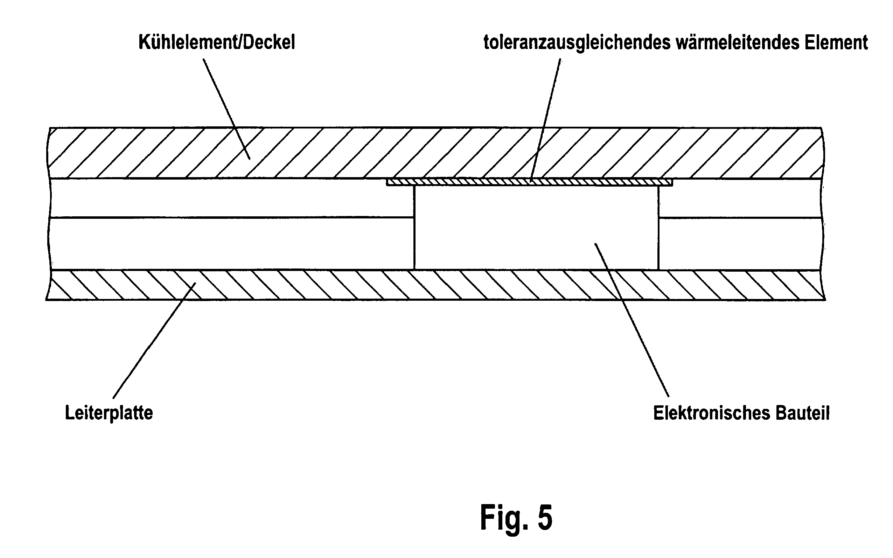

In Fig. 2a) ist der Zwischenraum 17 zwischen Metalldeckel 2 bzw. Kühlelement 6 vergrößert dargestellt. Zur Bereitstellung einer Wärmebrücke ist Bauelementträger 5 mit einem wärmeleitenden Kunststoffelement bestückt. Zwischen Kunststoffelement und Metalldeckel 2 befindet sich eine dünne Lage aus wärmeleitendem Silikon 7.

Fig. 2b) entspricht weitestgehend Fig. 2a), wobei hier zusätzlich Bauelementträger 5 mit elektronischem Leistungsbauelement 12 auf der dem Ventilblock zugewandten Seite bestückt ist. Kühlniet 13, welcher in eine Bohrung des Bauelementträgers eingelassen und mit dem elektronischen Bauelement und Kühlelement 8 verlötet oder verklebt wird, stellt eine wärmeleitende Verbindung zu Kühlelement 8 her.

In der vereinfachten Variante gemäß Fig. 2c) ist Kühlniet 13 und Kühlelement 8 zu einem einstückigen Distanzelement 9 aus einem gut wärmeleitenden Material verbunden.

In der Variante gemäß Fig. 2d) befindet sich Bauelement 12 auf der dem Deckel 2 zugewandten Seite des Bauelementträgers 5. Wegen des Bauhöhenunterschieds zwischen Bauelement 12 und Deckel 2 ergibt sich zwischen Bauelement 12 und Deckel 2 ein verbleibender Zwischenraum 18, welcher mit einem abgewinkelten Blechstreifen 10 ausgefüllt wird. Blechstreifen 10 ist ebenfalls aus einem gut wärmeleitenden Material, wie Metall hergestellt. Dabei ist vorteilhaft, dass Blechstreifen 10 gleichzeitig als eine Leiterbahn mit hoher Strombelastbarkeit genutzt werden kann.

## Patentansprüche

1. Steuergerätegehäuse (15), insbesondere für ein elektronisches Bremssystem, umfassend einen Deckel (2,3), ein mit dem Deckel verschließbares Gehäuseteil (4), einen Bauelementträger (5) für elektronische Bauelemente, ein mit zumindest einem Teil der elektronischen Bauelemente unmittelbar oder mittelbar in thermischem Kontakt stehenden Kühlelement, wobei das Kühlelement entweder eine flächige zusätzliche Kühlplatte (6) oder ein zumindest teilweise aus Metall ausgebildeter Deckel (2) ist, **dadurch gekennzeichnet, dass** der Bauelementträger mit den elektronischen Bauelementen (12) beidseitig bestückt ist und dass das Kühlelement und der Bauelementträger voneinander beabstandet sind und in dem dadurch entstehenden Zwischenraum (17) zwischen Kühlelement (2,6) und den zu kühlenden elektronischen Bauelementen oder dem Bauelementträger dünne, zum Toleranzausgleich flexibel gestaltete, Wärmeleitelemente (7) angeordnet sind, welche gleichzeitig eine hohe Wärmeleitung aufweisen.

2. Steuergerätegehäuse nach Anspruch 1, **dadurch gekennzeichnet, dass** das Kühlelement (2,6) mit dem verschließbaren Gehäuseteil oder dem Bauelementträger mittels einem oder mehreren formschlüssigen oder kraftschlüssigen Befestigungselementen (11) befestigt ist, wobei die Befestigungselemente vorzugsweise mit Distanzelementen, wie Distanzröhrchen, Distanzscheiben etc. kombiniert sein können, und durch den Kraftschluss des/der Befestigungselemente (11) das kompressible Wärmeleitelement zusammengedrückt wird.

3. Steuergerätegehäuse nach mindestens einem der vorhergehenden Ansprüche, **dadurch gekennzeichnet, dass** zwischen den toleranzausgleichenden Elementen, und den zu kühlenden Bauelementen oder dem Bauelementträger wärmeleitende Abstandselemente (8,9) oder Kühlfahnen (10) angeordnet sind, die insbesondere in unterschiedlicher Bauhöhe bereitgestellt sind, so dass diese auf der Bestückungsseite eine ebene Oberfläche für den unmittelbaren oder mittelbaren Kontakt mit dem Kühlelement/Deckel und den elektronischen Bauelementen herbeiführen.

4. Steuergerätegehäuse nach Anspruch 3, **dadurch gekennzeichnet, dass** die wärmeleitenden Abstandselemente Spritzgussteile sind, welche insbesondere werkzeugfallend sind, so dass diese in einem automatischen Bestückungsprozess einsetzbar sind.

5. Steuergerätegehäuse nach mindestens einem der vorhergehenden Ansprüche, **dadurch gekennzeichnet, dass** der Wärmetransfer zwischen den beiden Bestückungsseiten der Bauelementträger über umgeformte und eingenietete KühlHütchen (1) oder Kühlniete (13) erfolgt.

6. Steuergerätegehäuse nach mindestens einem der vorhergehenden Ansprüche, **dadurch gekennzeichnet, dass** das verschließbare Gehäuseteil einen Bereich zur Aufnahme mehrerer in diesem Bereich angeordneter Ventilspulen besitzt und das Gehäuseteil nach dem Prinzip eines magnetischen Steckers mit einem hydraulische Ventile enthaltenden metallischen Hydraulikblock verbunden (14) wird.

## Claims

1. Control device housing (15), in particular for an electronic brake module, comprising a lid (2, 3), a housing part (4) which can be closed with the lid, a component carrier (5) for electronic components, a cooling element which is in direct or indirect thermal contact with at least some of the electronic components, wherein the cooling element is either a planar additional cooling plate (6) or a lid (2) which is at least partially formed from metal, **characterized in that** the component carrier is equipped on both sides with the electronic components (12), and **in that** the cooling element and the component carrier are spaced apart from one another and thin heat-conducting elements (7) which are of flexible design in order to compensate tolerances and are at the same time good conductors of heat are arranged in the resulting intermediate space (17) between the cooling element (2, 6) and the electronic component or the component carrier to be cooled.

2. Control device housing according to Claim 1, **characterized in that** the cooling element (2, 6) is attached to the closable housing part or the component carrier by means of one or more positively locking or frictionally locking attachment elements (11), wherein the attachment elements can preferably be combined with spacer elements such as small spacer tubes, spacer discs etc., and the compressible heat-conducting element is compressed by the frictional engagement of the attachment element (11) or elements (11).

3. Control device housing according to at least one of the preceding claims, **characterized in that** heat-conducting spacer elements (8, 9) or cooling vanes (10) are arranged between the tolerance-compensating elements and the components or component carrier to be cooled, which spacer elements (8, 9) or cooling vanes (10) are, in particular, made available at different structural heights with the result that they give rise, on the equipment side, to a planar surface for making direct or indirect contact with the cooling element/lid and the electronic components.

4. Control device housing according to Claim 3, **characterized in that** the heat-conducting spacer elements are injection-moulded parts which are, in particular, parts requiring no further surface treatment, so that they can be used in an automatic equipping process.

5. Control device housing according to at least one of the preceding claims, **characterized in that** the thermal transfer between the two equipment sides of the component carriers is carried out by means of shaped and riveted-in cooling lugs (1) or cooling rivets (13).

6. Control device housing according to at least one of the preceding claims, **characterized in that** the housing part which can be closed has a region for holding a plurality of valve coils which are arranged in this region, and the housing part is connected, according to the principle of a magnetic plug, to a metallic hydraulic block containing hydraulic valves.

## Revendications

1. Boîtier d'appareil de commande (15), notamment pour un système de freinage électronique, comprenant un couvercle (2, 3), une partie de boîtier (4) pouvant être fermée avec le couvercle, un support de composants (5) pour des composants électroniques, un élément de refroidissement en contact thermique direct ou indirect avec au moins une partie des composants électroniques, l'élément de refroidissement étant soit une plaque de refroidissement supplémentaire plane (6) ou un couvercle (2) réalisé au moins en partie en métal, **caractérisé en ce que** le support de composants est équipé avec les composants électroniques (12) des deux côtés, et **en ce que** l'élément de refroidissement et le support de composants sont espacés l'un de l'autre et des éléments thermoconducteurs (7) minces, flexibles de manière à compenser les tolérances, sont disposés dans l'espace intermédiaire (17) ainsi créé entre l'élément de refroidissement (2, 6) et les composants électroniques à refroidir ou le support de composants, et présentent simultanément une grande conductibilité thermique.

2. Boîtier d'appareil de commande selon la revendication 1, **caractérisé en ce que** l'élément de refroidissement (2, 6) est fixé à la partie du boîtier refermable ou au support de composants au moyen d'un ou de plusieurs éléments de fixation (11) par engagement par correspondance géométrique ou par force, les éléments de fixation pouvant être combinés de préférence à des éléments d'espacement, comme des petits tubes d'espacement, des rondelles d'espacement, etc., et l'élément thermoconducteur compressible étant comprimé par l'engagement par force du ou des éléments de fixation (11).

3. Boîtier d'appareil de commande selon au moins l'une quelconque des revendications précédentes, **caractérisé en ce qu'**entre les éléments compensant les tolérances et les composants à refroidir ou le support de composants, sont disposés des éléments d'espacement thermoconducteurs (8, 9) ou des lamelles de refroidissement (10), qui sont arrangés notamment à différentes hauteurs de sorte qu'ils engendrent, sur le côté d'installation, une surface plane pour le contact direct ou indirect avec l'élément de refroidissement ou le couvercle et les composants électroniques.

4. Boîtier d'appareil de commande selon la revendication 3, **caractérisé en ce que** les éléments d'espacement thermoconducteurs sont des pièces moulées par injection, qui sont notamment fournies sans finition, de sorte qu'elles puissent être utilisées dans un processus d'installation automatique.

5. Boîtier d'appareil de commande selon au moins l'une quelconque des revendications précédentes, **caractérisé en ce que** le transfert thermique entre les deux côtés d'installation des supports de composants s'effectue par le biais de petits chapeaux de refroidissement (1) ou de rivets de refroidissement (13) façonnés et rivetés.

6. Boîtier d'appareil de commande selon au moins l'une quelconque des revendications précédentes, **caractérisé en ce que** la partie de boîtier refermable possède une région pour recevoir plusieurs bobines de soupape disposées dans cette région et la partie de boîtier est connectée selon le principe d'un connecteur à fiches magnétique à un bloc hydraulique (14) métallique contenant des soupapes hydrauliques.
